# EUROPÄISCHE PATENTSCHRIFT

(11) **EP 3 558 537 B1**
(45) Veröffentlichungstag und Bekanntmachung des Hinweises auf die Patenterteilung: **23.08.2023**
(21) Anmeldenummer: 18700137.5
(22) Anmeldetag: 03.01.2018
(51) Int. Cl.: B03C 3/12, B03C 3/68, B03C 3/72

(54) **ELEKTROFILTER**
ELECTROFILTER
ÉLECTRO-FILTRE

(30) Priorität: 30.01.2017 CH 982017
(43) Veröffentlichungstag der Anmeldung: 30.10.2019
(73) Patentinhaber: Clean Air Enterprise AG, 6343 Holzhaeusern ZG (CH)
(72) Erfinder: SCHINDLER, Kaspar, 5726 Unterkulm (CH)
(74) Vertreter: Falk, Urs
(86) Internationale Anmeldenummer: PCT/EP2018/050093
(87) Internationale Veröffentlichungsnummer: WO 2018/137899

(56) Entgegenhaltungen:
- EP-A1- 2 025 411
- CH-A1- 702 993
- JP-A- H02 222 737
- JP-A- H06 143 998
- JP-A- H11 267 547
- JP-A- 2007 225 246
- JP-A- 2015 044 134

## Beschreibung

### Elektrofilter

Die Erfindung betrifft einen Elektrofilter, der für den Einsatz in einer Gebäudelüftungsanlage ausgelegt ist.

### Hintergrund der Erfindung

Elektrofilter werden beispielsweise eingesetzt, um in einem Gas- oder Luftstrom enthaltene Partikel herauszufiltern. Elektrofilter können zwar in Lüftungsgeräten, Klimageräten und Klimaanlagen eingesetzt werden, jedoch haben sie sich in der Lüftungsbranche nicht durchgesetzt. In der Lüftungsbranche werden, insbesondere in Gebäudelüftungsanlagen, noch immer Taschenfilter eingesetzt.

Elektrofilter arbeiten mit Koronaentladung und elektrostatischen Feldern. Sie enthalten eine Ionisationsstufe und eine Kollektorstufe, sowie ein Hochspannungsspeisegerät zum Betrieb derselben. Mit der Luft in den Elektrofilter einströmende Staubpartikel, Aerosole, etc. werden in der Ionisationsstufe elektrostatisch aufgeladen und dann an Elektrodenflächen der Kollektorstufe abgeschieden. Das Hochspannungsspeisegerät muss sowohl eine Gleichhochspannung für die Erzeugung der Koronaentladung in der Ionisationsstufe als auch eine kleinere Gleichhochspannung für die Erzeugung eines starken elektrostatischen Feldes in der Kollektorstufe liefern. Diese Gleichhochspannungen werden typischerweise durch eine Kaskade von Spannungsverdopplern erzeugt, wobei die Spannung am Ausgang des letzten Spannungsverdopplers der Ionisationsstufe und die Spannung am Ausgang eines der vorgelagerten Spannungsverdoppler der Kollektorstufe zugeführt wird. Die Gleichhochspannung für die Kollektorstufe ist deshalb halb so gross wie oder noch kleiner als die Gleichhochspannung für die Ionisationsstufe.

Für den Einsatz in einer bestehenden Gebäudelüftungsanlage muss ein Elektrofilter verschiedene Anforderungen erfüllen. Darunter sind beispielsweise vorgegebene Abmessungen, damit der Elektrofilter einen Taschenfilter ersetzen kann, vorgegebene Luftvolumenströme und ein vorgegebener Filterabscheidegrad.

Aus der CH 702993 A1 ist ein Elektrofilter für die Reinigung eines Luftstroms bekannt, der eine Ionisationsstufe mit plattenförmigen Elektroden und zwischen diesen angeordneten, aus einem Draht bestehenden Elektroden aufweist. Die drahtförmigen Elektroden haben eine im Vergleich zu den ersten Elektroden stark gekrümmte Fläche und erzeugen in ihrer unmittelbaren Umgebung ein sehr starkes elektrisches Feld, wodurch Luftmoleküle ionisiert werden. Der Elektrofilter enthält weiter eine Kollektorstufe, um die ionisierten Partikel abzuscheiden. Ein Hochspannungsgenerator beaufschlagt die Ionisationsstufe und die Kollektorstufe mit voneinander unabhängigen Hochspannungen. Ein Stromsensor misst den zu den drahtförmigen Elektroden fliessenden Strom. Das Ausgangssignal des Stromsensors wird einem Regler zugeführt, der die Ionisationsspannung so regelt, dass der Strom einen vorgegebenen Grenzwert nicht überschreitet. Der Grenzwert ist so gewählt, dass die Ionisationsspannung kleiner als die Durchschlagsspannung ist.

In der JP H06143998 wie auch in der JP 2007-225246 A ist ein Luftreinigungsgerät beschrieben, das einen Elektrofilter mit einer Ionisationsstufe und einer Kollektorstufe umfasst. Ein Stromsensor misst den Strom, der von der Ionisationsstufe zur Erde zurückfliesst. Der Elektrofilter enthält einen Hochspannungsgenerator für die Ionisationsstufe und einen Hochspannungsgenerator für die Kollektorstufe. Die an die Ionisationsstufe angelegte Spannung wird von einem Spannungsregler so eingestellt, dass der gemessene Strom einen vorbestimmten Wert hat oder in einem durch zwei Grenzwerte definierten Bereich liegt.

Aus der JP 2015-044134 A ist ein Elektrofilter mit einer Ionisationsstufe und einer Kollektorstufe bekannt, die von zwei Hochspannungsspeisegeräten mit Energie versorgt werden. Die Steuerelektronik umfasst zwei Stromsensoren, die in der Hin- und Rückleitung zu/von der Ionisationsstufe angeordnet sind, und einen Spannungsregler, der die Differenz der beiden gemessenen Ströme bildet und die an die Ionisationsstufe angelegte Spannung entsprechend dem gemessenen Differenzwert innerhalb eines vorgegebenen Bandes erhöht oder absenkt. Auf diese Weise kann Energie gespart werden, wenn wenig Staub aus der Luft herauszufiltern ist.

Der Erfindung liegt die Aufgabe zugrunde, einen Elektrofilter für Gebäudelüftungsanlagen zu entwickeln, der bei einem auf die Normbaugrösse (B/H/T) 592 mm x 592 mm x 300 mm bezogenen Luftvolumenstrom von 3400 m³/h den Filterabscheidegrad E10 erreichen soll.

### Kurze Beschreibung der Erfindung

Die Erfindung ist im Anspruch 1 gekennzeichnet. Vorteilhafte Ausgestaltungen ergeben sich aus den abhängigen Ansprüchen.

Die Erfindung betrifft das Netzteil und die Steuerelektronik eines solchen Elektrofilters, deren Konzeption die folgenden Erkenntnisse zugrunde liegen:
Der durch die Ionisationsstufe fliessende Strom ist ein wichtiger Indikator für die Zuverlässigkeit der Ionisation der auszufilternden Partikel. Wenn trotz anliegender Gleichhochspannung kein oder ein zu kleiner Strom durch die Ionisationsstufe fliesst, dann findet keine oder keine ausreichende Ionisation statt. Dies hat zur Folge, dass der Elektrofilter die Luft nicht mehr oder nur unzureichend reinigt.

Beim Betrieb des Elektrofilters mit dem maximalen Luftvolumenstrom von 3400 m³/h muss die an die Kollektorstufe angelegte Gleichhochspannung auf Werte im Bereich von 5.5 bis 6 kV erhöht werden, damit der geforderte Filterabscheidegrad E10 erreicht werden kann.

Durch die Kollektorstufe fliesst normalerweise praktisch kein Strom, d.h. der Strom liegt im Bereich von höchstens einigen Mikroampere. Wenn jedoch die Gleichhochspannung einen Schwellenwert übersteigt, der bei dem vorliegenden Elektrofilter etwas oberhalb von 5 kV liegt, steigt der Strom an und erreicht relativ schnell Werte im Milliamperebereich.

Ein Hochspannungsspeisegerät der oben beschriebenen Art, bei dem eine Kaskade von Spannungsverdopplern vorhanden ist, an denen sowohl die Gleichhochspannung für die Ionisationsstufe als auch die Gleichhochspannung für die Kollektorstufe abgegriffen werden, verliert die Kontrolle über die an die Ionisationsstufe angelegte Gleichhochspannung, wenn der durch die Kollektorstufe fliessende Strom im Milliamperebereich liegt. D.h. die Gleichhochspannung für die Ionisationsstufe ist dann nicht mehr stabil.

Eine spezifische Aufgabe der Erfindung ist deshalb, eine Energieversorgung und Steuerelektronik für den Betrieb des Elektrofilters zu entwickeln, die diese Erkenntnisse berücksichtigen. Darüber hinaus soll der Elektrofilter möglichst wenig Ozon erzeugen und wenig Energie verbrauchen.

Erfindungsgemäss umfasst das Netzteil, das die Energieversorgung der Steuerelektronik, der Ionisationsstufe und der Kollektorstufe mit anderen Spannungen als die vom Stromnetz bereitgestellte Spannung besorgt, ein erstes Hochspannungsspeisegerät zur Versorgung der Ionisationsstufe mit einer ersten Gleichhochspannung und ein zweites Hochspannungsspeisegerät zur Versorgung der Kollektorstufe mit einer zweiten Gleichhochspannung. Dies ermöglicht den Betrieb der Kollektorstufe mit einer Gleichhochspannung, bei der ein Strom im Milliamperemeterbereich fliessen kann, ohne dass die Gleichhochspannung der Ionisationsstufe instabil wird. Das erste Hochspannungsspeisegerät umfasst weiter einen Stromsensor und einen Spannungsregler, wobei der Stromsensor den durch die Ionisationsstufe fliessenden Ionisationsstrom misst und der Spannungsregler dafür sorgt, dass sich die erste Gleichhochspannung derart einstellt, dass der gemessene Ionisationsstrom einen vorgegebenen Wert erreicht. Die Ionisationsstufe wird somit stromgesteuert betrieben, d.h. die Ionisationsstufe wird mit einem vorgebbaren Gleichstrom beaufschlagt.

Zudem ist der Elektrofilter geerdet, d.h. er weist einen mit Erde verbindbaren Anschluss auf, und die Ionisationsstufe und die Kollektorstufe enthalten Elektroden, die mit dem mit Erde verbindbaren Anschluss verbunden sind.

Die Steuerelektronik ist zudem mit Vorteil eingerichtet, um
a) den durch die Ionisationsstufe fliessenden Gleichstrom und die an die Kollektorstufe angelegte zweite Gleichhochspannung entsprechend dem durch den Elektrofilter strömenden Luftvolumenstrom einzustellen, d. h. den Gleichstrom und die zweite Gleichhochspannung zu reduzieren, wenn der Luftvolumenstrom geringer wird, bzw. zu erhöhen, wenn der Luftvolumenstrom grösser wird, und
b) den durch die Kollektorstufe fliessenden Gleichstrom zu überwachen, und ein Alarmsignal oder Fehlersignal abzugeben, wenn der Gleichstrom ausserhalb eines vorgegebenen Intervalls liegt.

Die Realisierung dieser zwei Punkte erfolgt wie folgt:
a) Die Steuerelektronik enthält einen Steuereingang für den Erhalt wenigstens eines Steuersignals und ist eingerichtet, den für die Ionisationsstufe vorzugebenden Gleichstrom und die an die Kollektorstufe anzulegende zweite Gleichhochspannung entsprechend dem Wert des wenigstens einen Steuersignals einzustellen.
b) Das zweite Hochspannungsspeisegerät umfasst einen Stromsensor, der den durch die Kollektorstufe fliessenden Gleichstrom misst, und die Steuerelektronik ist eingerichtet, ein Alarmsignal oder Fehlersignal abzugeben, wenn der Gleichstrom einen vorbestimmten Mindestwert unterschreitet und/oder einen vorbestimmten Maximalwert überschreitet.

Damit die beiden Gleichströme mittels eines sogenannten Shunts auf der Niederspannungsseite der Hochspannungsspeisegeräte gemessen werden können, sind die beiden Hochspannungsspeisegeräte eingangsseitig sowohl vom Netzanschluss (und damit von Erde) als auch voneinander galvanisch getrennt. Dies erfolgt durch galvanische Trennglieder.

Die Erfindung wird nachfolgend anhand von Ausführungsbeispielen und anhand der Zeichnung näher erläutert.

### Beschreibung der Figuren

- Fig. 1: zeigt ein Blockschaltbild der Energieversorgung und Steuerelektronik eines Elektrofilters gemäss einem ersten Ausführungsbeispiel, und
- Fig. 2: zeigtein Blockschaltbild der Energieversorgung und Steuerelektronik eines Elektrofilters gemäss einem zweiten Ausführungsbeispiel.

### Detaillierte Beschreibung der Erfindung

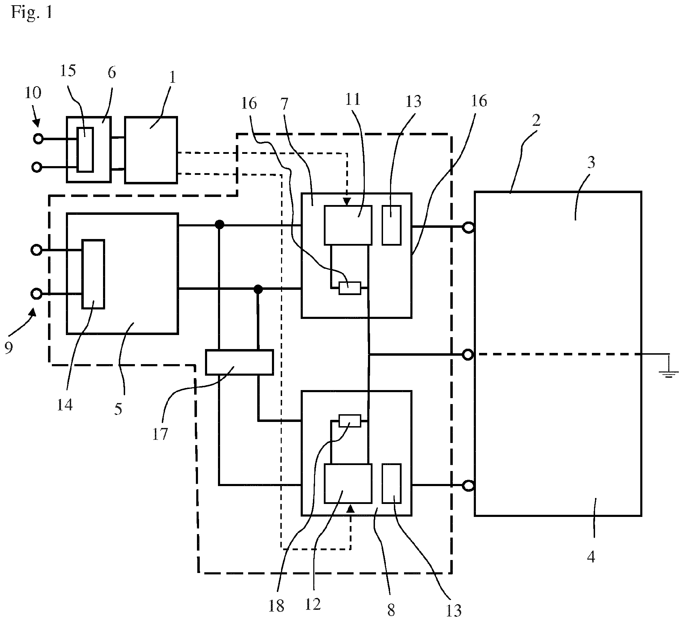

Die Fig. 1 zeigt ein Blockschaltbild eines erfindungsgemässen Netzteils für die Energieversorgung der Hochspannungsstufen und der Steuerelektronik 1 eines Elektrofilters 2 gemäss einem ersten Ausführungsbeispiel. Der Elektrofilter 2 umfasst eine Ionisationsstufe 3 und, bei diesem Beispiel, eine einzige Kollektorstufe 4. Das Netzteil umfasst bevorzugt ein Leistungsnetzteil für die Energieversorgung der Ionisationsstufe 3 und der Kollektorstufe 4 und ein davon getrenntes Steuerungsnetzteil für die Energieversorgung der Steuerelektronik 1. Das Netzteil umfasst deshalb insgesamt zwei Kleinspannungsnetzteile 5 und 6 und zwei Hochspannungsspeisegeräte 7 und 8.

Das Leistungsnetzteil umfasst das erste Kleinspannungsnetzteil 5, das die am Netzanschluss 9 anliegende Netzwechselspannung in eine Niedervolt-Gleichspannung umwandelt, beispielsweise in eine Gleichspannung von 24 V, sowie zwei daran angeschlossene Hochspannungsspeisegeräte 7, 8. Das erste Hochspannungsspeisegerät 7 dient der Versorgung der Ionisationsstufe 3 mit einer ersten Gleichhochspannung und das zweite Hochspannungsspeisegerät 8 dient der Versorgung der Kollektorstufe 4 mit einer zweiten Gleichhochspannung.

Die Verwendung von zwei Hochspannungsspeisegeräten 7, 8 ermöglicht es einerseits, die Ionisationsstufe 3 und die Kollektorstufe 4 unabhängig voneinander zu betreiben und damit den Betrieb beider Stufen einzeln zu optimieren. Insbesondere wird es dadurch möglich, die Kollektorstufe 4 (auch) bei einer derart hohen Gleichhochspannung zu betreiben, bei der ein Kollektorstrom im Milliamperebereich fliesst, ohne dass dadurch die an die Ionisationsstufe 3 angelegte Gleichhochspannung beeinflusst wird.

Das Steuerungsnetzteil umfasst das zweite Kleinspannungsnetzteil 6, das die am Netzanschluss 10 anliegende Netzspannung ebenfalls in eine Niedervolt-Gleichspannung umwandelt, beispielsweise in eine Gleichspannung von 12 V.

Die getrennte Versorgung der Steuerelektronik 1 und der Leistungselektronik des Elektrofilters 2 ermöglicht es, dass Anzeigeelemente der Steuerelektronik 1, die Auskunft über den Status des Elektrofilters 2 geben, wie z.B. LEDs, auch dann leuchten, wenn die Leistungselektronik vom Stromnetz getrennt ist. Prüf- und Wartungsarbeiten an der Steuerelektronik 1 wie auch am Elektrofilter 2 können bei eingeschalteter Stromversorgung der Steuerelektronik 1 jederzeit ohne Gefährdung der Bedienperson durchgeführt werden.

Die Ionisationsstufe 3 und die Kollektorstufe 4 des Elektrofilters 2 enthalten Elektroden, in der Regel plattenförmige Elektroden, die geerdet sind. Die beiden Kleinspannungsnetzteile 5 und 6 enthalten je ein galvanisches Trennglied 14 bzw. 15, das die Ausgangsseite galvanisch von der Eingangsseite trennt. Sie sind beispielsweise Trafonetzteile, deren Transformator ein galvanisches Trennglied ist. Die beiden Hochspannungsspeisegeräte 7, 8 sind somit galvanisch vom Netzanschluss 9 bzw. 10 getrennt. Die Hochspannungsspeisegeräte 7, 8 enthalten einen Spannungsregler 11 bzw. 12 und einen nachgeschalteten Spannungsverstärker 13 für die Erzeugung der ersten bzw. zweiten Gleichhochspannung. Der Spannungsverstärker 13 besteht beispielsweise aus einer Kaskade von Spannungsverdopplern.

Der Betrieb der Ionisationsstufe 3 erfolgt stromgesteuert, d.h. die von dem ersten Hochspannungsspeisegerät 7 erzeugte erste Gleichhochspannung wird so eingestellt, dass der durch die Ionisationsstufe 3 fliessende Ionisationsstrom (ein Gleichstrom) einen vorbestimmten Wert annimmt. Das erste Hochspannungsspeisegerät 7 umfasst dazu einen Stromsensor, der den durch die Ionisationsstufe 3 fliessenden Ionisationsstrom misst und dessen Ausgangssignal dem Spannungsregler 11 zugeführt wird. Der Spannungsregler 11 regelt die an den nachfolgenden Spannungsverstärker 13 abgegebene Gleichspannung so, dass die erste Gleichhochspannung sich so einstellt, dass der gemessene Ionisationsstrom den vorgegebenen Wert annimmt. Der Ionisationsstrom kann entweder in der Zuleitung gemessen werden, in der er vom ersten Hochspannungsspeisegerät 7 zu der Ionisationselektrode der Ionisationsstufe 3 fliesst (diese Alternative ist nicht durch die beanspruchte Erfindung abgedeckt), oder erfindungsgemäss in der Rückleitung, in der der Ionisationsstrom von Erde (da die entsprechenden Elektroden des Elektrofilters 2 geerdet sind) zum Hochspannungsspeisegerät 7 zurück fliesst. Da die Ionisationselektrode mit einer sehr hohen Gleichhochspannung von mehreren Kilovolt beaufschlagt wird, ist die erfindungsgemässe Messung des Ionisationsstroms in der Rückleitung viel einfacher. Wie aus der Fig. 1 ersichtlich ist, verlaufen die Rückleitungen von dem geerdeten Anschluss des Elektrofilters 2 zu den beiden Hochspannungsspeisegeräten 7 und 8 zunächst gemeinsam und verzweigen dann. Die Messung des zum ersten Hochspannungsspeisegerät 7 zurück fliessenden Ionisationsstroms kann mithilfe eines Shunts 16 (ohmscher Widerstand) erfolgen, der im ersten Hochspannungsspeisegerät 7 in der Rückleitung nach der Verzweigung angebracht ist. Die an dem Shunt 16 abfallende Spannung wird gemessen und als Stromwert dem Spannungsregler 11 zugeführt, der den gemessenen Stromwert mit einem vorgegebenen Sollwert vergleicht und daraus die Steuerspannung für den nachfolgenden Spannungsverstärker bildet. Dazu ist es jedoch nötig, dass der Stromkreis für den Ionisationsstrom "schwimmend" ist, d.h. es darf keinen anderen Strompfad geben, auf dem Strom von Erde zur Ionisationselektrode der Ionisationsstufe 3 fliessen kann. Dies wird dadurch erreicht, dass das erste Hochspannungsspeisegerät 7 sowohl von den beiden Netzanschlüssen 9 und 10 (weil die Ausgänge der beiden Kleinspannungsnetzteile 5 und 6 galvanisch vom Netzanschluss 9 bzw. 10 getrennt sind) als auch vom zweiten Hochspannungsspeisegerät 8 galvanisch getrennt ist. Die galvanische Trennung der beiden Hochspannungsspeisegeräte 7 und 8 erfolgt durch ein galvanisches Trennglied 17.

Die Steuerung des Elektrofilters 2 erfolgt bevorzugt leistungsabhängig. Der Elektrofilter 2 ist spezifiziert für einen bestimmten Filterabscheidegrad, zum Beispiel den Filterabscheidegrad E10, und für einen maximalen Luftvolumenstrom, bei dem der spezifizierte Filterabscheidegrad noch erreicht wird. Je geringer der Luftvolumenstrom ist, desto geringer ist die Strömungsgeschwindigkeit der Luft und desto länger ist die Verweilzeit der ionisierten Partikel im Elektrofilter 2. Die an die Kollektorstufe 4 angelegte zweite Gleichhochspannung erzeugt in der Kollektorstufe 4 eine elektrische Feldstärke, die als elektrische Kraft auf die ionisierten Partikel einwirkt und diese beschleunigt und damit bewirkt, dass die ionisierten Partikel an den Elektroden abgeschieden werden. Je länger die Verweilzeit der ionisierten Partikel in der Kollektorstufe 4 ist, desto geringer darf die elektrische Feldstärke und damit auch die zweite Gleichhochspannung sein.

Die Steuerelektronik ist deshalb bevorzugt eingerichtet, die an die Kollektorstufe 4 anzulegende zweite Gleichhochspannung entsprechend dem tatsächlichen Luftvolumenstrom einzustellen. In der Regel kann auch der Ionisationsstrom reduziert werden, wenn der Luftvolumenstrom abnimmt. Die Steuerelektronik ist deshalb bevorzugt auch eingerichtet, den Ionisationsstrom entsprechend dem tatsächlichen Luftvolumenstrom einzustellen. Für diesen Zweck enthält die Steuerelektronik einen Steuereingang für den Erhalt eines oder mehrerer Steuersignale und Mittel (Hardware und/oder Software), um den Ionisationsstrom und die zweite Gleichhochspannung entsprechend dem oder den Steuersignalen einzustellen.

Das zweite Hochspannungsspeisegerät 8 umfasst zudem mit Vorteil einen zweiten Stromsensor, ebenfalls in Form eines Shunts 18, der den durch die Kollektorstufe 4 fliessenden Kollektorstrom (ein Gleichstrom) misst, und die Steuerelektronik 1 ist eingerichtet, ein Alarmsignal oder Fehlersignal anzuzeigen oder abzugeben, wenn der gemessene Kollektorstrom einen vorbestimmten Maximalstrom übersteigt.

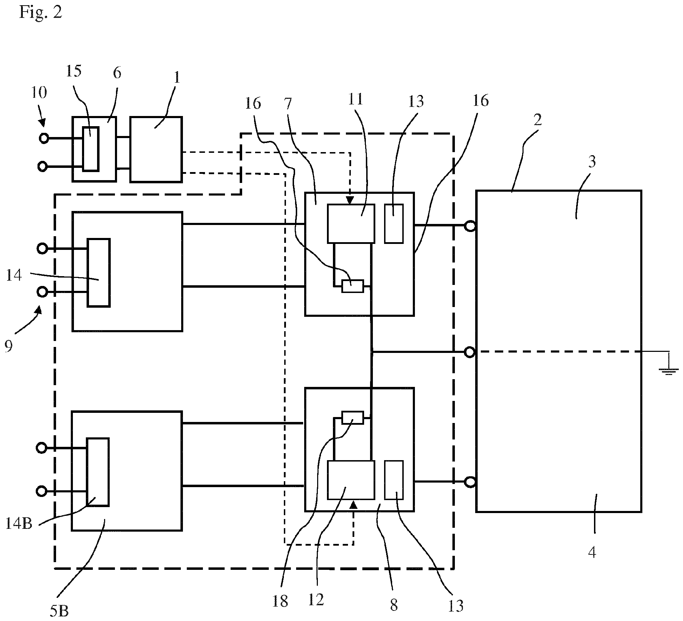

Die Fig. 2 zeigt ein Blockschaltbild eines erfindungsgemässen Netzteils für die Energieversorgung der Hochspannungsspeisegeräte 7 und 8 und der Steuerelektronik 1 eines Elektrofilters 2 gemäss einem zweiten Ausführungsbeispiel. Das Leistungsnetzteil umfasst hier zwei Kleinspannungsnetzteile 5 und 5B, die je ein galvanisches Trennglied 14 bzw. Trennglied 14B enthalten. Auch bei dieser Ausführung sind die Hochspannungsspeisegeräte 7 und 8 sowohl vom Stromnetz als auch voneinander galvanisch getrennt.

Während Ausführungsformen dieser Erfindung gezeigt und beschrieben wurden, ist es für den Fachmann ersichtlich, dass mehr Modifikationen als oben erwähnt möglich sind, ohne von dem erfinderischen Konzept abzuweichen. Die Erfindung ist daher nur durch die Ansprüche beschränkt.

## Patentansprüche

1. Elektrofilter (2), umfassend eine Ionisationsstufe (3), eine Kollektorstufe (4) und ein Netzteil,
wobei das Netzteil ein erstes Hochspannungsspeisegerät (7) zum Beaufschlagen der Ionisationsstufe (3) mit einer ersten Gleichhochspannung und ein zweites Hochspannungsspeisegerät (8) zum Beaufschlagen der Kollektorstufe (4) mit einer zweiten Gleichhochspannung umfasst, wobei das erste Hochspannungsspeisegerät (7) einen Stromsensor und einen Spannungsregler (11) umfasst, wobei der Elektrofilter (2) einen mit Erde verbindbaren Anschluss aufweist,
wobei die Ionisationsstufe (3) und die Kollektorstufe (4) Elektroden enthalten, die mit dem mit Erde verbindbaren Anschluss verbunden sind,
wobei das erste Hochspannungsspeisegerät (7) und das zweite Hochspannungsspeisegerät (8) sowohl vom Netzanschluss (9) als auch voneinander galvanisch getrennt sind,
wobei der Stromsensor in einer von dem mit Erde verbindbaren Anschluss zum ersten Hochspannungsspeisegerät (7) führenden Rückleitung angeordnet und dazu eingerichtet ist, den durch die Ionisationsstufe (3) fliessenden Ionisationsstrom zu messen, und
wobei der Spannungsregler (11) eingerichtet ist, dafür zu sorgen, dass sich die erste Gleichhochspannung derart einstellt, dass der gemessene Ionisationsstrom einen vorgegebenen Wert erreicht.

2. Elektrofilter (2) nach Anspruch 1, weiter umfassend einen mit einem Steuersignal beaufschlagbaren Steuereingang, wobei das erste Hochspannungsspeisegerät (7) eingerichtet ist, den Ionisationsstrom entsprechend dem Wert des Steuersignals einzustellen.

3. Elektrofilter (2) nach Anspruch 1 oder 2, wobei das zweite Hochspannungsspeisegerät (8) eingerichtet ist, die zweite Gleichhochspannung entsprechend dem Wert des Steuersignals einzustellen.

4. Elektrofilter (2) nach einem der Ansprüche 1 bis 3, wobei das zweite Hochspannungsspeisegerät (8) einen zweiten Stromsensor umfasst, wobei der zweite Stromsensor dazu eingerichtet ist, den durch die Kollektorstufe (4) fliessenden Kollektorstrom in einer von dem mit Erde verbindbaren Anschluss zum zweiten Hochspannungsspeisegerät (8) führenden Rückleitung zu messen, und der Elektrofilter dazu eingerichtet ist, ein Alarmsignal oder Fehlersignal zu erzeugen, wenn der gemessene Kollektorstrom einen vorbestimmten Maximalstrom übersteigt.

## Claims

1. Electrostatic precipitator (2), comprising an ionization stage (3), a collector stage (4) and
a power supply, the power supply comprising a first high-voltage power supply unit (7) for applying a first DC high voltage to the ionization stage (3) and a second high-voltage power supply unit (8) for applying a second DC high voltage to the collector stage (4),
wherein the first high-voltage power supply unit (7) includes a current sensor and a voltage controller (11),
wherein the electrostatic precipitator (2) includes a terminal connectable to earth,
wherein the ionization stage (3) and the collector stage (4) contain electrodes which are connected to the terminal connectable to earth,
wherein the first high-voltage power supply unit (7) and the second high-voltage power supply unit (8) are galvanically separated both from the mains connection (9) and from one another,
wherein the current sensor is arranged in a return line which leads from the terminal connectable to earth to the first high-voltage power supply unit (7) and is configured to measure the ionization current flowing through the ionization stage (3), and
wherein the voltage controller (11) is configured to ensure that the first DC high voltage is adjusted in such a way that the measured ionization current reaches a predetermined value.

2. Electrostatic precipitator (2) according to claim 1, further comprising a control input to which a control signal can be applied, wherein the first high-voltage power supply unit (7) is configured to adjust the ionization current according to the value of the control signal.

3. Electrostatic precipitator (2) according to claim 1 or 2, wherein the second high-voltage power supply unit (8) is configured to adjust the second DC high voltage according to the value of the control signal.

4. Electrostatic precipitator (2) according to any of claims 1 to 3, wherein the second high-voltage power supply unit (8) comprises a second current sensor, wherein the second current sensor is configured to measure the collector current flowing through the collector stage (4) in a return line leading from the terminal connectable to earth to the second high-voltage power supply unit (8), and the electrostatic precipitator is configured to generate an alarm signal or fault signal when the measured collector current exceeds a predetermined maximum current.

## Revendications

1. Précipitateur électrostatique (2), comprenant un étage d'ionisation (3), un étage collecteur (4), et une alimentation électrique, l'alimentation électrique comprenant une première alimentation haute tension (7) pour appliquer une première haute tension continue à l'étage d'ionisation (3) et une deuxième alimentation haute tension (8) pour appliquer une deuxième haute tension continue à l'étage collecteur (4),
dans lequel la première alimentation haute tension (7) comprend un capteur de courant et un contrôleur de tension (11),
dans lequel le précipitateur électrostatique (2) comprend une borne pouvant être reliée à la terre,
dans lequel l'étage d'ionisation (3) et l'étage collecteur (4) contiennent des électrodes qui sont connectées à la borne reliée à la terre,
dans lequel la première alimentation haute tension (7) et la deuxième alimentation haute tension (8) sont séparées galvaniquement à la fois du raccordement au réseau (9) et l'une de l'autre,
dans lequel le capteur de courant est disposé dans une ligne de retour qui va de la borne reliée à la terre à la première alimentation haute tension (7) et est configuré pour mesurer le courant d'ionisation circulant à travers l'étage d'ionisation (3), et
dans lequel le contrôleur de tension (11) est configuré pour assurer que la première haute tension continue est ajustée de telle sorte que le courant d'ionisation mesuré atteigne une valeur prédéterminée.

2. Précipitateur électrostatique (2) selon la revendication 1, comprenant en outre une entrée de commande à laquelle un signal de commande peut être appliqué, la première alimentation haute tension (7) étant configurée pour ajuster le courant d'ionisation en fonction de la valeur du signal de commande.

3. Précipitateur électrostatique (2) selon la revendication 1 ou 2, dans lequel la deuxième alimentation haute tension (8) est configurée pour ajuster la deuxième haute tension continue en fonction de la valeur du signal de commande.

4. Précipitateur électrostatique (2) selon l'une quelconque des revendications 1 à 3, dans lequel la deuxième alimentation haute tension (8) comprend un deuxième capteur de courant, dans lequel le deuxième capteur de courant est configuré pour mesurer le courant de collecteur circulant à travers l'étage de collecteur (4) dans une ligne de retour allant de la borne reliée à la terre à la deuxième alimentation haute tension (8), et le précipitateur électrostatique est configuré pour générer un signal d'alarme ou un signal de défaut lorsque le courant de collecteur mesuré dépasse un courant maximal prédéterminé.
